# EUROPEAN PATENT APPLICATION

(11) **EP 3 438 564 A1**
(43) Date of publication of application: **06.02.2019**
(21) Application number: 18185907.5
(22) Date of filing: 26.07.2018
(51) Int. Cl.: F24H 9/20, A47B 47/02, F16B 5/00, F24F 13/14

(54) **CASING ASSEMBLY**

(30) Priority: 31.07.2017 GB 201712288
(71) Applicant: Flamgard Engineering Limited, Pontypool, Torfaen NP4 6YW (GB)
(72) Inventor: Cook, Tim, Pontypool, Torfaen NP4 9YW (GB)
(74) Representative: Abel & Imray

(57) **Abstract**

A method of assembling a corner of a four-sided casing is provided. The method comprises the steps of providing a first sheet metal part and a second sheet metal part for meeting at the corner and extending away from the corner in mutually transverse directions, when the casing is assembled; placing the first and second parts in a position approximate to their assembled positions but with one of the parts displaced from the other along an axis orthogonal to the mutually transverse directions; engaging a first set of interlocking formations on the first and second parts to constrain relative movement of the first and second parts to sliding movement along the axis orthogonal to the mutually transverse directions; and sliding the first and second parts relative to one another until a second set of interlocking formations on the first and second parts interengage.

## Description

### Field of the Invention

The present invention concerns a method of assembling a four-sided casing of sheet metal and an assembled sheet metal casing. More particularly, but not exclusively, the invention concerns a method of assembling a rectangular casing for use for example as a casing of a damper or as a section of ducting, and an assembled rectangular casing of that kind.

### Background of the Invention

It is well known to form rectangular casings such as sections of ducting or frames for dampers from sheet metal. In a standard procedure, sheet metal is punched into suitable parts and then bent to form one or more flanges. A rectangular casing can then be formed from four parts which meet at their corners, where they have to be joined. A common technique for joining the parts is to weld them. Prior to welding it is important to position the parts correctly and that may be done in various ways, such as by using jigs. In that way an entirely satisfactory join can be obtained but the procedure is relatively time consuming and that increases production costs.

The present invention seeks to mitigate the above-mentioned problem. Alternatively or additionally, the present invention seeks to provide an improved method of assembling a four-sided casing and to provide an improved, assembled, four-sided casing.

### Summary of the Invention

According to a first aspect of the invention there is provided a method of assembling a corner of a four-sided casing, the method comprising the following steps:
providing a first sheet metal part and a second sheet metal part for meeting at the corner and extending away from the corner in mutually transverse directions, when the casing is assembled;
placing the first and second parts in a position approximate to their assembled positions but with one of the parts displaced from the other along an axis orthogonal to the mutually transverse directions;
engaging a first set of interlocking formations on the first and second parts to constrain relative movement of the first and second parts to sliding movement along the axis orthogonal to the mutually transverse directions; and
sliding the first and second parts relative to one another until a second set of interlocking formations on the first and second parts interengage.

By assembling the casing in this manner with both the first and second sets of interlocking formations, it is possible to simplify and/or speed up the assembly process.

It is within the scope of the broadest aspect of the invention for no further fixing step to be carried out following the assembly method of the invention as defined above. That may apply particularly if the second set of interlocking formations are dimensioned to provide a tight fit. More commonly, however, it will be preferred that the method further includes the step, while the first and second set of interlocking formations are engaged, of further fixing the first part to the second part. The step of further fixing the first part to the second part may comprise welding, riveting and/or gluing. The further fixing step may be carried out partly or wholly at one or both of the interlocking formations, but the further fixing may also be carried out in one or more other regions where the first and second parts are adjacent to one another. For example the further fixing step may be carried out along the line defining the corner of the casing. Especially if a seal is required between the parts, the further fixing step may be carried out along the whole of the length of the line defining the corner of the casing, for example by welding.

The step of further fixing the first part to the second part may comprise tack welding followed by a still further fixing step. The tack welding may be carried out on the second set of interlocking formations. The still further fixing step may be carried out on other adjacent portions of the first and second parts as well or instead of the parts that are tack welded. For example the still further fixing step may be carried out along all or some of the length of the line defining the corner of the casing. The still further fixing step may comprise welding, riveting and/or gluing.

The length of sliding of the first and second parts relative to one another may be limited and the parts may be arranged such that the limit is reached when the second set of interlocking formations are interengaged. That may make assembly especially simple because an assembler simply slides the parts together as far as the first set of interlocking formations allows and knows that in that position the second set of interlocking formations are interengaged. Also, to hold the parts in that position, even if the parts interlock only loosely, it is only necessary to prevent relative movement of the parts in one direction because relative movement in all other directions is very limited (in the case of loose fitting) or totally prevented (in the case of tight fitting).

The first sheet metal part may comprise an elongate strip part and an elongate flange part projecting perpendicular to the strip part from an edge thereof and the second sheet metal part may comprise an elongate strip part and an elongate flange part projecting perpendicular to the strip part from an edge thereof.

The flange parts may be integral with the strip parts. The flange parts may be formed by bending of the first and second sheet metal parts.

The first set of interlocking formations may be provided on the strip parts of the first and second parts.

The second set of interlocking formations may be provided on the flange parts of the first and second parts.

The first sheet metal part may comprise an elongate strip part and a pair of elongate flange parts projecting perpendicular to the strip part from opposite edges thereof and the second elongate sheet metal part may comprise a pair of elongate flange parts projecting perpendicular to the strip part from opposite edges thereof. The flange parts may be integral with the strip parts. The flange parts may be formed by bending of the first and second sheet metal parts.

The first set of interlocking formations may be provided on the strip parts of the first and second parts, the second set of interlocking formations may be provided on the flange parts projecting from first edges of the first and second parts and a third set of interlocking formations may be provided on the flange parts projecting from second edges of the first and second parts, the third set of interlocking formations becoming engaged when the second set of interlocking formations become engaged. The third set of interlocking formations may be the same shapes as the second set of interlocking formations.

The first set of interlocking formations may comprise slots in the first and second sheet metal parts. The slots may be formed adjacent to ends of the first and second sheet metal parts. The slots may be formed by portions of the first and second parts projecting from the ends of the parts. In that arrangement the portions of the first and second parts that project outside the corner may be kept small.

The second set of interlocking formations may comprise a projecting portion on the first sheet metal part and a matching recess on the second sheet metal part. Preferably the recess widens from its opening into its interior; in that case the interlocking formations can be disengaged only by relative movement in the direction of sliding allowed by the first set of interlocking formations. In an embodiment of the invention described below with reference to the drawings, the second set of interlocking formations comprise a projection and recess of substantially trapezoidal shape. Other shapes, for example curved shapes, as employed in jigsaw puzzles, may be used. The shapes may readily be formed by punching.

As described above, the invention may be applied to just one corner of a casing but it is preferred that all four corners of the casing are of similar construction. Thus, the method may further comprise providing third and fourth elongate sheet metal parts, the third and fourth elongate sheet metal parts being connected to each other and to the first and second elongate sheet metal parts by substantially the same method as defined above to form a four-sided casing. The four-sided casing may be a rectangular casing. Each side of the casing may be of the same length so that the rectangular casing is square.

The invention may be employed in a variety of applications: for example, the casing may be a length of ducting; in that case the interior of the casing may be empty space. Another possibility is for one or more components to be mounted in the casing; in that case the casing may have a particular function; for example parallel bars may be mounted in the casing to form a grill. In an especially preferred application, an example of which is described below with reference to the drawings, one or more vanes are pivotally mounted in the assembled casing to form a damper assembly.

According to a second aspect of the invention there is provided a four-sided casing comprising a corner assembled from a first sheet metal part and a second sheet metal part meeting at the corner and extending away from the corner in mutually transverse directions, the first and second parts comprising a first set of interlocking formations that themselves constrain relative movement of the first and second parts to sliding movement along the axis orthogonal to the mutually transverse directions, and a second set of interlocking formations on the first and second parts that interengage and are able to have been brought into interengagement through the relative sliding movement of the first and second parts.

The first and second parts may be further fixed together by another kind of fixing, for example welding, gluing or riveting.

According to the second aspect of the invention there is also provided a four-sided casing assembled by a method as defined above.

It will of course be appreciated that features described in relation to one aspect of the present invention may be incorporated into other aspects of the present invention. For example, the casing of the invention may incorporate any of the features described with reference to the method of the invention and *vice versa.*

### Description of the Drawings

Embodiments of the present invention will now be described by way of example only with reference to the accompanying schematic drawings of which:
- Figure 1: is an isometric view of a damper assembly according to a first embodiment of the invention, with the assembly shown with vanes in a closed position;
- Figure 2: is an isometric view of the damper assembly shown in Fig. 1 with the vanes of the assembly shown in a closed position;
- Figure 3: is an isometric view of first and second parts according to the first embodiment of the invention which, when assembled, form part of the damper assembly shown in Figs. 1 and 2;
- Figure 3A: is an isometric view of the first part and a portion of the second part of the parts shown in Fig.3, showing how they are assembled;
- Figure 4: is an isometric view of the first and second parts shown in Fig.3 after assembly and tack welding;
- Figure 5: is an isometric view of the parts shown in Figs. 3 and 4 after full welding of the parts; and
- Figure 6: is an isometric view of first and second parts according to a second embodiment of the invention which, when assembled, form part of a damper assembly that is a modified version of the assembly shown in Figs. 1 and 2 .

### Detailed Description

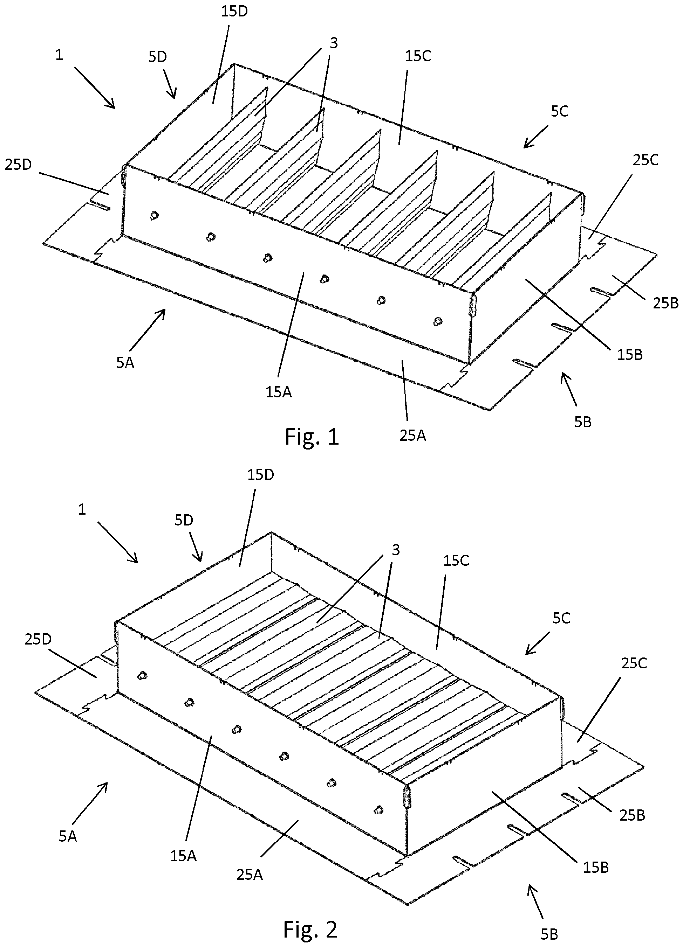

Referring first to Figs. 1 and 2, there is shown a damper assembly 1 that may for example be a fire damper assembly for placing in a duct (not shown). The assembly has a plurality of pivoted vanes 3 which are pivotable between a normal open position shown in Fig. 1 and a closed position shown in Fig. 2. In known damper assemblies such pivoting is accomplished by a prime mover via appropriate mechanical linkages and that may be the case in this instance too.

The vanes 3 are mounted in a rectangular casing 5 made up of four elongate sheet metal parts 5A, 5B, 5C and 5D which are assembled together in a special way embodying the invention. The parts are elongate and have first and second interlocking formations at their ends. Each part comprises a respective strip part 15A, 15B, 15C and 15D, which together surround a rectangular opening around which the casing extends, and a respective flange part 25A, 25B, 25C and 25D which extends outwardly from an edge of the strip part perpendicular thereto. The flange parts are formed by bending the sheet metal.

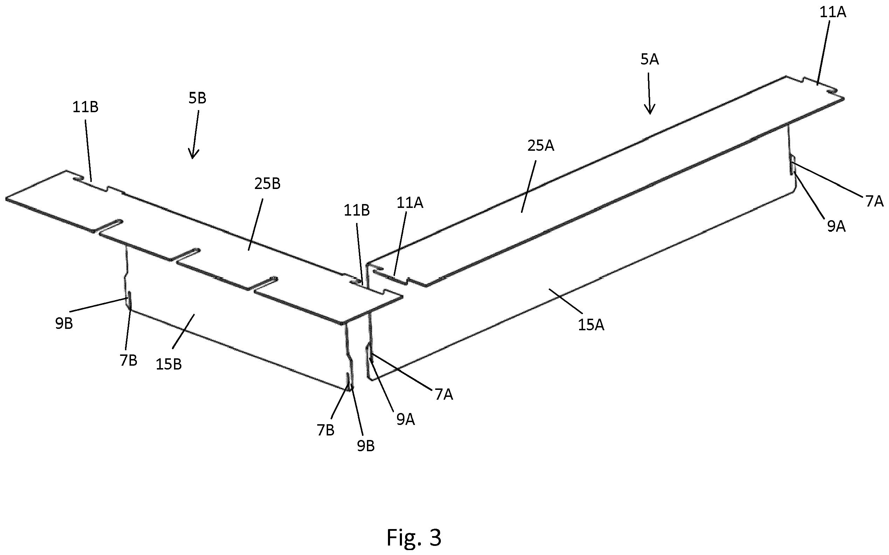

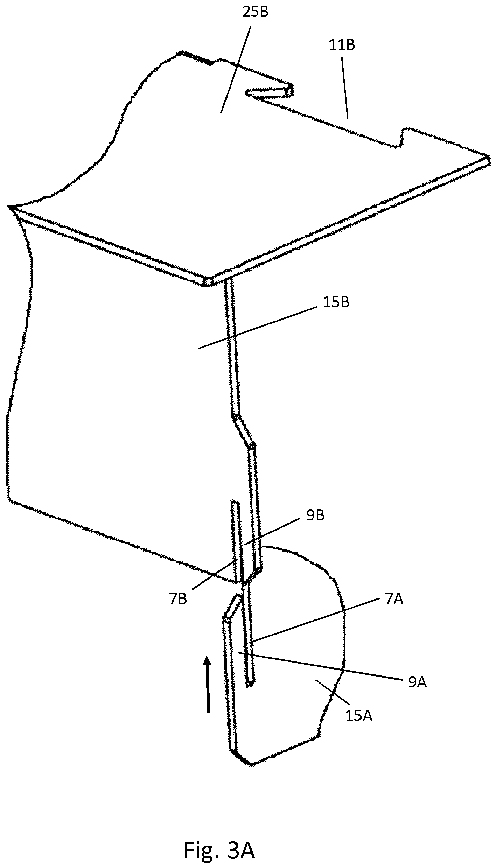

A method of assembling a corner of the casing 5 will now be described with reference to Fig.3, Fig. 3A, Fig. 4 and Fig.5. Referring first to Fig.3 in which one corner of the casing 5 is shown, the first set of interlocking formations are provided by slots 7A and 7B formed between the main portions of the strip parts 15A and 15B and a projecting tab 9A and 9B. The second set of interlocking formations are provided by a projection 11A on the end of the flange part 25A and a recess 11B in the end of the flange part 25B. As illustrated in Fig. 3A the parts 5A and 5B may be brought into interlocking engagement by positioning the part 5A below the part 5B as viewed in Fig. 3A and then sliding the part 5A upwardly relative to the part 5B in the direction shown by the arrow to bring the slots 7A and 7B into engagement with the strip parts 15B and 15A respectively, whereupon the parts 5A and 5B become engaged with one another and are able to slide relative to one another only along a line perpendicular to their longitudinal axes. As the part 5A is slid upwardly relative to the part 5B as far as the slots 7A and 7B allow, the projection 11A enters the recess 11B and the second set of interlocking formations become engaged. The positions of the parts at this stage is shown in Figs. 1 and 2.

As can be seen from Fig. 3, parts 5A and 5B are both symmetrical. For part 5B, both ends of the strip part 15B are arranged with a projecting tab 9B which forms a slot 7B, and both ends of the flange part 25B are arranged with a recess 11B. For part 5A, both ends of the strip part 15A are arranged with tabs 9A which form slots 7A, and both ends of each flange part 25A comprise projections 11A. The symmetrical arrangement of the parts enables the casing 5 to be assembled from four parts 5A, 5B, 5C, 5D, as shown in Fig. 1 and Fig. 2, with part 5D being identical to part 5B and part 5A being identical to part 5C. Each corner of the casing can therefore be assembled using the corner assembly method as described above in order to form the four-sided casing 5. It will be understood that the corner assembly method is described above with reference to parts 5A and 5B by way of example only, and that the four corners of the casing 5 need not be formed in any particular order when assembling the casing 5.

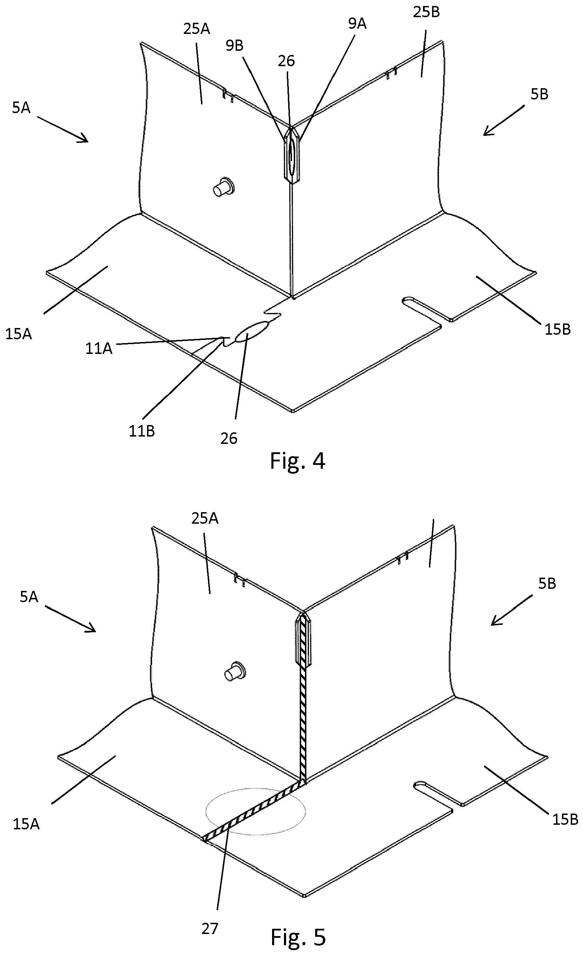

Once the four-sided casing 5 is formed by assembling the four corners as described above, further steps of fixing can be carried out in order to fix each of the parts together in a more permanent manner. This process will be described with reference to the parts 5A and 5B shown in Figs. 4 and 5. However, it will be understood that the described steps of further fixing can be applied at any interface between any of the neighbouring parts.

As a first step of fixing, tack welds 26 are formed across the boundary of the parts 5A and 5B. In Fig. 4 it can be seen that tack welds are formed at the interface of the interlocked projection 11A and recess 11B and at the interface between the interengaged tabs 9A and 9B. The tack welds alone can be sufficient for fixing the parts 5A and 5B in a permanent fashion. However, if a seal is required between the parts or a stronger fixing is required, a still further fixing step can be carried out. With the tack welds 26 in place, the parts 5A and 5B are fixed in relation to one another (whereas without the tack welds in place there might be some play between the parts 5A and 5B due to the tolerances of the interengaging formations) so that a single weld 27 can be formed across the boundary of the parts 5A and 5B, along the entire length of the boundary, as shown schematically in Fig. 5.

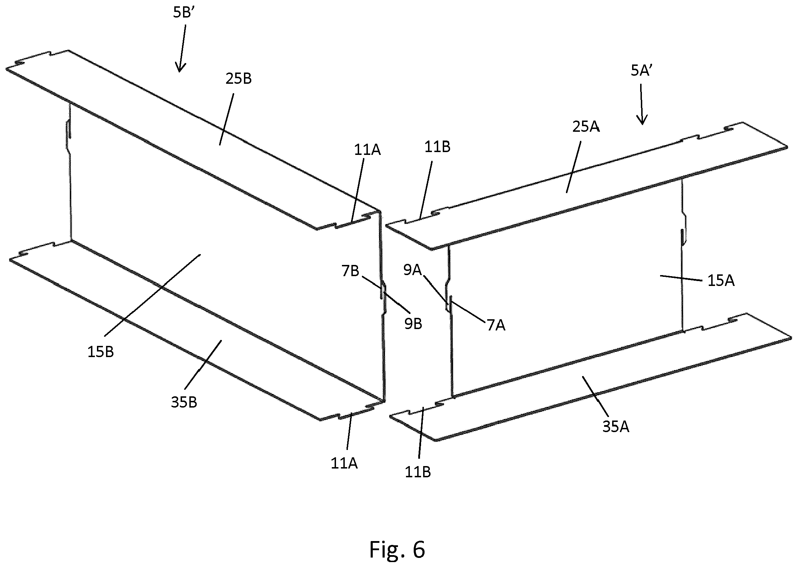

Fig. 6 shows parts for forming a casing according to a second embodiment of the invention. The arrangement is similar to that shown in Fig. 3 but in this case the parts 5A' and 5B' are each provided with two flange parts 25, 35 extending outwardly from opposite edges of the strip parts 15A and 15B. Such an arrangement may be employed for example when a casing is required to have additional stiffness. In Fig. 6, parts corresponding to those shown in Fig. 3 are indicated by the same reference numerals. It may be noted that the locations of the tabs 9A and 9B and the slots 7A and 7B are altered in the embodiment of Fig. 6 in view of the addition of the further flange parts which are referenced 35A and 35B in Fig. 6.

Whilst the present invention has been described and illustrated with reference to particular embodiments, it will be appreciated by those of ordinary skill in the art that the invention lends itself to many different variations not specifically illustrated herein. By way of example only, certain possible variations will now be described. The casing assembly may comprise the casing of a grill rather than a damper assembly; in that case bars may be fixed across the grill, for example between the strip parts 15A and 15C. Another possibility is for the casing to define a length of duct, in which case the interior of the casing defined between the strip parts 15A, 15B, 15C and 15D may be entirely empty. In that case if the length of duct is similar to its width, the strip parts may not be especially elongate and the width of the strip parts may even be greater than their lengths.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of assembling a corner of a four-sided casing, the method comprising the following steps:
providing a first sheet metal part and a second sheet metal part for meeting at the corner and extending away from the corner in mutually transverse directions, when the casing is assembled;
placing the first and second parts in a position approximate to their assembled positions but with one of the parts displaced from the other along an axis orthogonal to the mutually transverse directions;
engaging a first set of interlocking formations on the first and second parts to constrain relative movement of the first and second parts to sliding movement along the axis orthogonal to the mutually transverse directions; and
sliding the first and second parts relative to one another until a second set of interlocking formations on the first and second parts interengage.

2. A method according to claim 1, wherein the method further includes the step, while the first and second set of interlocking formations are engaged, of further fixing the first part to the second part.

3. A method according to claim 2, wherein the step of further fixing the first part to the second part comprises welding, riveting and/or gluing.

4. A method according to claim 3, wherein the step of further fixing the first part to the second part comprises tack welding followed by a still further fixing step.

5. A method according to any preceding claim, wherein the still further fixing step comprises welding, riveting and/or gluing.

6. A method according to any preceding claim, wherein the length of sliding of the first and second parts relative to one another is limited and the parts are arranged such that the limit is reached when the second set of interlocking formations are interengaged.

7. A method according to any preceding claim, wherein the first sheet metal part comprises an elongate strip part and an elongate flange part projecting perpendicular to the strip part from an edge thereof and the second sheet metal part comprises an elongate strip part and an elongate flange part projecting perpendicular to the strip part from an edge thereof.

8. A method according to claim 7, wherein the first set of interlocking formations are provided on the strip parts of the first and second parts.

9. A method according to claim 8, wherein the second set of interlocking formations are provided on the flange parts of the first and second parts.

10. A method according to any of claims 1 to 6, wherein the first sheet metal part comprises an elongate strip part and a pair of elongate flange parts projecting perpendicular to the strip part from opposite edges thereof and the second elongate sheet metal part comprises a pair of elongate flange parts projecting perpendicular to the strip part from opposite edges thereof.

11. A method according to claim 10, wherein the first set of interlocking formations are provided on the strip parts of the first and second parts, the second set of interlocking formations are provided on the flange parts projecting from first edges of the first and second parts and a third set of interlocking formations are provided on the flange parts projecting from second edges of the first and second parts, the third set of interlocking formations becoming engaged when the second set of interlocking formations become engaged.

12. A method according to any preceding claim, wherein the first set of interlocking formations comprise slots in the first and second sheet metal parts.

13. A method according to any preceding claim, wherein the casing is a casing of a damper assembly.

14. A four-sided casing comprising a corner assembled from a first sheet metal part and a second sheet metal part meeting at the corner and extending away from the corner in mutually transverse directions, the first and second parts comprising a first set of interlocking formations that themselves constrain relative movement of the first and second parts to sliding movement along the axis orthogonal to the mutually transverse directions, and a second set of interlocking formations on the first and second parts that interengage and are able to have been brought into interengagement through the relative sliding movement of the first and second parts.

15. A four-sided casing according to claim 18, in which the first and second parts are further fixed together by another kind of fixing, for example welding, gluing or riveting.
